Europäisches Patentamt

European Patent Office

Office européen des brevets

(19)

(11) Veröffentlichungsnummer: **0 027 989**
**A1**

(12) # EUROPÄISCHE PATENTANMELDUNG

(21) Anmeldenummer: 80106387.6

(22) Anmeldetag: 20.10.80

(51) Int. Cl.³: **A 01 N 25/26,** A 01 N 63/00,
A 01 N 65/00

(30) Priorität: 24.10.79 CH 9518/79

(71) Anmelder: Delley, Bernard, Dr., Chemin Gabriel 12b,
CH-2034 Peseux (CH)

(43) Veröffentlichungstag der Anmeldung: 06.05.81
Patentblatt 81/18

(72) Erfinder: Delley, Bernard, Dr., Chemin Gabriel 12b,
CH-2034 Peseux (CH)

(74) Vertreter: Jaeger, Klaus, Dr. et al, Jaeger, Grams &
Pontani Patentanwälte Bergstrasse 48 1/2,
D-8035 München-Gauting (DE)

(84) Benannte Vertragsstaaten: AT BE CH DE FR GB IT LI

(54) Verfahren zur Herstellung eines rodentiziden Köders.

(57) Für die Bekämpfung der Wühlmaus, welche auf bekannte, künstlich hergestellte rodentizide Köder nicht anspricht, wird ein neuartiger Köder in der Weise hergestellt,
dass ein Trägerkern aus verzehrbarem Material, vorzugsweise ein Lebensmittelteigwaren-Kern, in einer Mischtrommel durch abwechselnde Zugabe von klebefähigen Mehlen
und Quellmittel (insbesondere Äthanol/Wasser) mit einer
Mantelschicht versehen wird. Der die Attraktivität bewirkende Lockstoff (insbesondere Karottenaroma, Karottenpulver) und der rodentizide Aktivstoff werden beim Mantel-
schicht-Aufbau einverleibt bzw. durch nachträgliche Imprägnierung aufgebracht. Der Köder ist speziell ausgerichtet auf das Ausbringen mit Köderauslegemaschinen
(burrow builder).

Beschreibung

Die Erfindung betrifft ein Verfahren zur Herstellung eines rodentiziden Köders in Granulat-Form.

Ein rodentizider Köder besteht aus einem Futtermaterial, dem man eine geeignete toxische Substanz zugegeben hat; er wird den Nagern wie beispielsweise Ratten, Haus- oder Feldmäusen zum Frass vorgelegt und entfaltet seine Wirkung, nachdem ihn das Tier verzehrt hat. Als Futtermaterial-Komponente kommen in Betracht Weizenkörner, entschälter Hafer, zylindrische Presslinge aus Mehlen pflanzlicher Herkunft oder Fruchtmark, oder auch zu Stücken zerkleinerte frische Wurzeln. Die Zufügung des Giftstoffes lässt sich durch Imprägnierung (beispielsweise im Falle von Weizenkörnern oder entschälten Haferkörnern) oder durch Zumischung zu Mehlen im Verlauf des Fabrikationsprozesses bewerkstelligen.

Die sich bei jedem Giftköder-Typ stellende entscheidende Frage bezieht sich auf die Annahme durch den Nager, dem er vorgelegt wird, sowie auch auf seine Attraktivität. Die Herstellung eines brauchbaren Giftköders für die granivoren Nagetierarten, d.h. also für die Körnerfresser, verursacht in aller Regel keine besonderen Probleme; viel schwieriger ist es dagegen, bei sich nicht oder nur in geringfügigem Masse von Körnern ernährenden Nager-Arten wie etwa bei der Wühlmaus eine gute Köder-Annahme zu erzielen. Die Wühlmaus, die sich zur Hauptsache von Wurzeln, Knollen und grünen Pflanzenteilen ernährt, ist dafür bekannt, dass ihre Bekämpfung mit der Giftköder-Technik besonders grossen Schwierigkeiten begegnet. Man kann daher als feststehend betrachten, dass im Handel bis dahin kein absolut sicherer Giftköder zur Bekämpfung der Wühlmaus existiert, wenn man von würfelförmig zerkleinerten Karotten absieht. Diesem Köderungsverfahren haften aber die folgenden Schwierigkeiten an: Die Herstellung der Würfelabschnitte muss an Ort und Stelle erfolgen. Für deren maschinelles Auslegen mittels burrow builder/Streuautomatik müssen die Oberflächen der mit dem Giftstoff imprägnierten Karottenabschnitte trocken sein, damit der Ausstreuungs-Mechanismus funktioniert (Karotten vom Typ "halbtrocken" bis "viertelstrocken"). Die imprägnierten Karottenabschnitte lassen sich nur für kurze Zeit aufbewahren und eignen sich daher im Gegensatz zu Trocken-Granulaten nicht für Handel und Lagerung. Ausserdem müssen sie bei Verlust ihres natürlichen Aromas mit synthetischem Karotten-Aroma nacharomatisiert werden, um wieder den Gebrauchswert der ursprünglichen Frischkarotte zu erlangen.

Mit dem erfindungsgemässen Verfahren werden diese Nachteile behoben; man gelangt damit zu einem Giftköder, der namentlich die beiden folgenden Anforderungen erfüllt: (1) hohe Attraktivität insbesondere für Nager und Insektenfresser und damit Gewährleistung zufriedenstellender Wirksamkeit; (2) vorzügliche Eignung für die Anwendung auf maschinellem Wege (burrow builder), da sich gleichzeitig auch die durch gegenseitige Scheuerung des Granulats in Behälter hervorgerufene Staubbildung auf ein Minimum reduziert.

Gegenstand der Erfindung ist ein Verfahren zur Herstellung eines rodentiziden Köders in Granulatform, bei welchem man auf Trägerkerne aus einem für Nager annehmbaren organischen Material mit zum Beschichten geeigneter Oberfläche in einer rotierenden Mischtrommel durch abwechselnde portionenweise Zugabe eines klebfähigen Mehlgemisches und eines Quellungsmittels unter zeitweiliger Zwangsbelüftung einen Mantel aufbaut. Der rodentizide Wirkstoff wird dabei mindestens einem Teil des Mehlgemisches oder des Quellungsmittels beigefügt oder durch nachträgliche Imprägnierung eingeführt. Den erstgenannten Weg wird man dann beschreiten, wenn ein pulverförmiger Giftstoff benützt werden soll, wogegen sich die beiden andern Möglichkeiten empfehlen, wenn er in gelöster bzw. emulgierter Form vorliegt.

Als Trägerkerne eignen sich insbesondere Körner bzw. kurzzylindrische Strangabschnitte von Speise-Teigwaren aus Hartweizengriess in der Art sogenannter Makkaroni, deren gerillte, runzelige Aussenzylinderfläche sich für die Beschichtung zum Aufbau des Mantels besonders vorteilhaft auswirkt. Solche Teigwarenkerne können zusätzlich Spezialmehle enthalten. Wenn der Köder vornehmlich für Nager eingesetzt werden soll, kommen hiefür namentlich Mehle vegetabilischer Herkunft wie Karottenpulver in Betracht, welches z.B. in einem Anteil von 4% enthalten sein kann, wogegen sich für die Verwendung des Köders gegen Insectivoren Mehle aus Material tierischen Ursprungs wie etwa Fleisch- oder Blutmehl empfehlen. Trägerkerne mit vegetabilischen und/oder animalischen Mehlen können von der Lebensmittel-Teigwarenindustrie nach branchen-üblicher Technologie hergestellt werden; sie enthalten als solche weder Giftstoffe noch weitere Zusatzstoffe, welche für Rodentizide indiziert wären, und können nach beliebiger Lagerungsdauer für die erfindungsgemässe Köderherstellung verwendet werden. Anstelle von Kernen aus solchem Teigwarenmaterial kann man jedoch auch Kerne aus anderem von Nagern verzehrbarem, natürlichem oder künstlich hergestelltem organischem Material verwenden, vorausgesetzt dass sich die chemische und/oder physikalische Beschaffenheit ihrer Oberfläche zum Beschichten eignet. Das bedeutet, dass diese entweder rauh genug oder schwammartig sein muss, um dem aufzubringenden Ueberzug eine Verankerung zu ermöglichen, und/oder dass sie unter dem Einfluss des Quellmittels eine ausreichende Klebkraft entfaltet.

Unter klebfähigen Mehlgemischen sind im Sinne der Erfindung Mischungen zu verstehen, die zu überwiegendem Anteil aus Komponenten bestehen, welche bei Befeuchtung mit Quellmitteln wie Alkohol und Wasser eine Klebkraft entfalten, die für die Verklebung der Mehlpartikel untereinander sowie auch gegenüber dem Kern ausreicht, um bei Behandlung in der Mischtrommel die Bildung eines den Kern umhüllenden geschlossenen Mantels ausreichender Dicke zu gewährleisten. Solche Mehlgemische bestehen demgemäss vorzugsweise aus stärkereichen Mehlen pflanzlicher Herkunft, wobei sich beispielsweise eine Zusammensetzung aus 30% Weichweizenmehl, 30% Mais- oder Kartoffelstärke und 40% pulverisierten getrockneten Karotten für Nager als Karottenköder-Zusatz eignet. Soll der Köder ausschliesslich oder vorwiegend gegen Insectivoren anwendbar sein, kann der Weizenmehl- und Mais- bzw. Karoffelstärke-Komponente anstelle von Karottenpulver beispielsweise Fleisch- oder Blutmehl zugemischt werden.

Als flüssige Quellungsmittel kommen wie bereits angedeutet insbesondere Alkohol, Wasser oder Alkohol-Wassergemische in Betracht.

Als rodentizid wirkenden Giftstoff kann man irgend eine rodentizide Substanz aus dem Stand der Technik wählen, wobei man vorzugsweise von Cumarin-Derivaten wie insbesondere Bromadiolon oder anderen Antikoagulantien Gebrauch macht.

Als Mischtrommel können im Prinzip beliebige Apparate eingesetzt werden wie sie von der Apparatebautechnik für das Mischen von körnig/pulvrigen Materialien zur Verfügung gestellt werden; es eignen sich hiefür auch Betonmischer oder Dragierkessel.

Bei der Durchführung des Verfahrens werden die in der rotierenden Mischtrommel befindlichen Trägerkerne zunächst durch Zugabe geringer Mengen eines Quellungsmittels befeuchtet; hiefür eignen sich wiederum insbesondere Alkohol-Wassergemische, welche bereits klebkrafterhöhende und/oder aromatisierende Zusatzstoffe wie Fruchtmehle und dgl. enthalten können. Wenn die Oberfläche der Kerne zufolge Feuchtigkeitsaufnahme klebrig geworden und zur Aufnahme der aufzubringenden Mantelschicht vorbereitet ist, trägt man nach Massgabe des Verbrauchs Portionen des Mehlgemisches und damit abwechselnd Portionen des Quellungsmittels so in die Mischtrommel ein, dass sich das Mehlgemisch durch einen physikalischen Verklebungsvorgang in Form eines Ueberzugs an die Kernoberfläche bindet. Die Rotation der Mischtrommel bewirkt dabei ein ständiges Rollen der Trägerkerne, wodurch die aus dem Mehlgemisch gebildete feuchte Oberflächen- oder Mantelschicht geglättet und abgerundet und in Zusammenwirkung mit der Warmluftzufuhr verfestigt wird und so das Kornvolumen zunehmend anwachsen lässt.

Das als Produkt dieser Prozessphase anfallende Granulat zeigt wegen seiner noch feuchten und klebrigen Oberfläche in der Regel vorerst noch ein schlechtes Roll- und Rieselverhalten. Deshalb setzt man anschliessend mit Vorteil eine kleine Menge eines öligen Produktes zu, beispielsweise Paraffinöl in einer Menge von 1 bis 5% (d.h. etwa 10 - 50 cm$^3$ pro kg Granulat), um so eine Oberflächen-Imprägnierung zu erzielen. Unter der Einwirkung zugeführter Warmluft und fortgesetzten Drehens der Mischtrommel wird die Granulatoberfläche geglättet und zunehmend getrocknet, bis man das Granulat in der Trommel klingeln hört. In diesem Moment trennen sich die einzelnen Körner voneinander und verlieren die Tendenz zu gegenseitigem Verkleben; sie zeigen dann eine glatte glänzende Oberfläche und gleichen einer mehr oder weniger abgerundeten Pille. Eine zusätzliche Trocknung kann in einem Trockenschrank bei 30 bis 40°C erfolgen.

Für die Zugabe des toxischen bzw. rodentiziden Stoffes bieten sich im Verlauf des beschriebenen Verfahrens verschiedene Möglichkeiten an; deren Wahl wird zweckmässig von der Form abhängig gemacht, in welcher die toxische Substanz vorliegt oder eingesetzt werden soll. Benützt man einen in alkoholischer Lösung vorliegenden rodentiziden Stoff, wird die entsprechende Lösung zweckmässig der Gesamtheit oder einem Teil des bei der Bildung des Mantels verwendeten Quellmitels zugesetzt. Der Vorteil dieses Vorgehens besteht darin, dass mit der Auflösung des rodentiziden Stoffes eine besonders feine Verteilung und innige Vermengung desselben mit der Masse erhalten wird. Liegt der Giftstoff in pulverisierter Form vor, wird er zweckmässig dem Mehlgemisch oder einem Teil desselben beigemischt. Rodentizide Substanzen, die in Form von Emulsionen vorliegen, werden dagegen zweckmässig dem öligen Produkt zugesetzt, das für die im vorangehenden Abschnitt beschriebene Imprägnierung zu Oberflächenglättung verwendet wird.

Die besondere Attraktivität und Wirksamkeit des Köders lässt sich ergänzen und sicherstellen durch zusätzliche Aromatisierung. Zu diesem
Zwecke kann man im Verlauf des Trocknungsprozesses das Granulat mit
einer Lösung eines Aromastoffes behandeln, welcher auf den jeweiligen
Anwendungszweck des Köders ausgerichtet ist. Als bestgeeigneter Aromatisierungsstoff für erfindungsgemässe, insbesondere gegen die Wühlmaus (Arvicola terrestris L.) zu verwendende Köder hat sich synthetisches Karottenaroma und daneben Ananasaroma und Apfelaroma erwiesen.
Die Aromatisierung kann auch, sei es ausschliesslich oder teilweise
und zur Ergänzung und Reaktivierung einer vorausgehend beim Trocknungsvorgang vorgenommenen Aromatisierung, unmittelbar vor der Anwendung des Köders erfolgen. Die Aromatisierung vor dem Gebrauch hat sich
als besonders wirksam erwiesen für die Herstellung erfindungsgemässer
Köder mit Karottenaroma; man gelangt auf diese Weise zu einem vollgültigen Ersatz für Frischkarottenköder mit hoher Attraktivität und hohem
agronomischem Wert.

Zur Erläuterung der Erfindung wird nachstehend eine Ausführungsform
des Köderherstellungsverfahrens im Detail beschrieben:

20 kg Hartweizen-Teigwaren-Körner zylindrischer Form mit Durchmesser
und Zylinderhöhe von je ca. 5 mm werden in einer mit 20 Umdrehungen/
min rotierenden Mischtrommel übersprüht mit einer Lösung von 100 g
Karottenpulver und 50 g Fruchtglucose in 1 Liter 50% wässrigen
Aethanol. Sobald die Masse der Körner gleichmässig befeuchtet ist,
stellt man den Antriebsmotor ab und lässt 15 min ruhen.

Anschliessend wird die Mischtrommel wieder in Rotation versetzt,
worauf man von einem Stärkemehlgemisch, hergestellt aus

    8 kg  Kartoffelstärke

    8 kg  Karottenpulver

  14 kg  Halbweissmehl

im Verlauf von insgesamt 90 min 20 kg portionenweise einstreut und abwechselnd damit die Körnermasse mit Aethanol (98%) besprüht; ausserdem wird in Abständen von etwa 30 min Warmluft von 30 - 40°C für die Dauer von je 5 min über die Körnermasse geblasen.

Wenn nach den genannten 90 min 20 kg Mehlgemisch und 5 bis 5,5 Liter Alkohol verbraucht sind, giesst man in gleicher Weise in 3 Portionen eine Lösung von 10 g Bromadiolon in 2 Liter Alkohol über die Körnermassen und setzt dann die beschriebene Prozedur fort, bis nach einer Gesamtdauer von etwa 2 Stunden die restlichen 10 kg Stärkemehlgemisch und weitere 2,5 bis 3 Liter Aethanol verbraucht sind.

Sobald die Körnermasse nach der letzten Alkoholzugabe trocken erscheint, giesst man 300 ml Paraffinöl über die Masse, dreht für 5 min weiter, lässt während 10 min unter Warmlufteinblasen ruhen und bringt das Produkt dann für 24 Stunden in einen Trockenschrank mit Innentemperatur von 30°C. Anschliessend wird die Körnermasse wieder in die Mischtrommel übergeführt und darin unter Rotation mit einem Gemisch von 100 ml Ananasaroma (Getränke AG Obermeilen) und 300 ml Karottenaroma (Givaudan SA Genf) in 400 ml Aethanol besprüht und bis zum Abtrocknen weitergedreht.

Man erhält auf diese Weise Köderkörner von ziemlich regelmässiger kugelförmiger Gestalt mit einem mittleren Durchmesser von 6 bis 8 mm und einem Durchschnittsgewicht von 0,3 g.

Im allgemeinen soll das fertiggestellte Granulat pro Kilogramm etwa 3000 bis 5000 Körner aufweisen. Das Gewicht von 1000 Körnern bzw. die Anzahl der Körner pro Kilogramm ist von Bedeutung, damit die Ausstreuautomatik der für die Anwendung benützten Köderauslegemaschinen (burrow builder, "Maulwurfpflüge") auf den gewünschten Wert eingestellt werden kann, welcher die richtige Granulatmenge pro Laufmeter behandelter Bodenfläche gewährleistet. Form, Kaliber und Gewicht des erfindungsgemäss erhaltenen Köders sind speziell ausgerichtet auf dessen Anwendung mittels burrow builder mit automatischer Ausstreuvorrichtung. Dies bedeutet jedoch in keiner Weise, dass das Granulat nicht auch manuell in Habitat der zu bekämpfenden Schädlingsarten anwendbar ist.

DEL-1-EP

Dr. Bernard  D e l l e y

Chemin Gabriel 12b

CH-2034 Peseux

Verfahren zur Herstellung eines rodentiziden Köders

P a t e n t a n s p r ü c h e

1  Verfahren zur Herstellung eines rodentiziden Köders in Granulatform, dadurch gekennzeichnet, dass man Trägerkerne aus einem für Nager annehmbaren organischen Material mit zum Beschichten geeigneter Oberfläche in einer rotierenden Mischtrommel mit einem Quellungsmittel befeuchtet und auf den Kernen durch abwechselnde portionenweise Zugabe eines klebfähigen Mehlgemisches und eines Quellungsmittels unter zeitweiliger Zwangsbelüftung einen Mantel aufbaut, wobei der rodentizide Wirkstoff mindestens einem Teil des Quellungsmittels oder des Mehlgemisches beigefügt oder durch nachträgliche Imprägnierung eingeführt wird.

2  Verfahren nach Anspruch 1, dadurch gekennzeichnet, dass man Trägerkerne aus Speise-Teigwarenmaterial verwendet.

3  Verfahren nach Anspruch 2, dadurch gekennzeichnet, dass man zylindrische Teigwarenkerne mit gerillter Oberfläche verwendet.

0027989

4    Verfahren nach Anspruch 1, dadurch gekennzeichnet, dass das Mehlgemisch mindestens teilweise aus stärkehaltigen Mehlen pflanzlicher Herkunft besteht.

5    Verfahren nach Anspruch 1, dadurch gekennzeichnet, dass das Mehlgemisch mindestens teilweise aus proteinhaltigen Mehlen tierischer Herkunft besteht.

6    Verfahren nach Anspruch 1, dadurch gekennzeichnet, dass man das nach Abschluss des Mantelaufbaus erhaltene trockene Granulat in der Mischtrommel zur Glättung der Kornoberflächen mit einem Oel behandelt.

7    Verfahren nach Anspruch 1, dadurch gekennzeichnet, dass als Quellmittel Aethanol oder ein Aethanol-Wassergemisch verwendet wird.

8    Verfahren nach Anspruch 1, dadurch gekennzeichnet, dass der rodentizide Wirkstoff in der Phase des Mantelaufbaus als alkoholische Lösung zugegeben wird.

9    Verfahren nach Anspruch 1, dadurch gekennzeichnet, dass der rodentizide Wirkstoff in der Phase des Mantelaufbaus als Pulver dem Mehlgemisch zugegeben wird.

10    Verfahren nach Anspruch 1 und 6, dadurch gekennzeichnet, dass der rodentizide Wirkstoff zusammen mit dem Oel auf das Granulat aufgebracht wird.

11    Verfahren nach Anspruch 1 und 6, dadurch gekennzeichnet, dass der Köder abschliessend mit einem künstlichen Aromastoff aromatisiert wird.

0027989

12  Verfahren nach Anspruch 11, dadurch gekennzeichnet, dass man für die Aromatisierung synthetisches Karottenaroma, gegebenfalls in Kombination mit Ananasaroma, verwendet.

13  Nach dem Verfahren gemäss Anspruch 1 erhaltener rodentizider Köder.

14  Verfahren zur Bekämpfung von Wühlmäusen in Weide- und Wieslandflächen durch Einbringen des nach Anspruch 1 erhaltenen Köders in den Erdboden.

15  Verfahren nach Anspruch 14, dadurch gekennzeichnet, dass man den Köder vor dem Einbringen in den Erdboden aromatisiert.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>GB - A - 1 259 280</u> (RODENTEX)<br>* Ansprüche * | 1 |
| | -- | |
| | <u>EP - A - 0 003 302</u> (BAYER)<br>* Ansprüche; Seite 5, Zeile 27 - Seite 6, Zeile 23 * | 1 |
| | -- | |
| | <u>DE - B - 1 144 531</u> (CHEMISCHE WERKE ALBERT) | 14 |
| A | <u>CH - A - 299 284</u> (BOEHRINGER) | |
| A | <u>CH - A - 348 003</u> (SOCIETE FRAN-<u>CAISE DE COMPLEMENTS ALIMENTAIRES</u>) | |
| A | <u>FR - A - 2 331 285</u> (LIPHA)<br>& DE - A - 2 647 722<br> GB - A - 1 511 400 | |
| | -- | |
| A | <u>FR - A - 2 382 854</u> (TREHET) | |
| A | <u>DE - A - 2 317 285</u> (TSCHESKOS-<u>LOVENSKA AKADEMIE</u>) | |
| A | <u>CA - A - 1 040 051</u> (JONES) | |

**KLASSIFIKATION DER ANMELDUNG (Int. Cl.)**

A 01 N 25/26
63/00
65/00

**RECHERCHIERTE SACHGEBIETE (Int. Cl.)**

A 01 N 25/12
25/26
63/00
65/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-02-1981 | DECORTE |